# EUROPÄISCHE PATENTSCHRIFT

(11) **EP 0 411 371 B1**
(45) Veröffentlichungstag und Bekanntmachung des Hinweises auf die Patenterteilung: **02.03.1994**
(21) Anmeldenummer: 90113517.8
(22) Anmeldetag: 14.07.1990
(51) Int. Cl.: F16H 47/04

(54) **Leistungsverzweigtes hydrostatisch-mechanisches Lastschaltgetriebe**
Split-torque hydromechanical transmission
Transmission hydromécanique à division de puissance

(30) Priorität: 03.08.1989 DE 3925732
(43) Veröffentlichungstag der Anmeldung: 06.02.1991
(73) Patentinhaber: Holmer, Alfons, D-84069 Schierling (DE)
(72) Erfinder: Dlubal, Miloslav, Dipl.-Ing., D-4834 Harsewinkel 1 (DE)
(74) Vertreter: Wasmeier, Alfons, Dipl.-Ing.

(56) Entgegenhaltungen:
- DE-A- 2 442 444
- DE-A- 3 815 780
- US-A- 3 744 344
- US-A- 4 043 227
- US-A- 4 068 543

## Beschreibung

Die Erfindung bezieht sich auf ein stufenloses, leistungsverzweigtes hydrostatisch-mechanisches Lastschaltgetriebe für Fahrzeuge, insbes. Ackerschlepper.

Es sind eine Vielzahl von unterschiedlichen hydromechanischen Getrieben bekannt, von denen die leistungsverzweigten Getriebe am weitesten verbreitet sind. Für die Verteilung der Leistung auf zwei Zweige werden zweckmäßigerweise Planetengetriebe benutzt, die eine exakte stufenlose Drehzahlverstellung im Zweig mit der kleineren Leistung ermöglichen.

Aus der Literatur, z.B. Dr. Loomann, Zahnradgetriebe, Springer-Verlag 1988, sind Getriebe bekannt, bei denen eine Antriebswelle mit stufenlos verstellbarer Drehzahl und kleiner Leistung sowie eine weitere Antriebswelle mit konstanter Drehzahl und hoher Leistung angetrieben wird. Die Abtriebswelle läuft dabei mit der gesamten Leistung und ebenfalls stufenlos um. Bei derartigen Planetengetrieben sind zwei Drehzahlen unabhängig voneinander frei wählbar. Hingegen sind die beiden Antriebsdrehmomente nicht unabhängig voneinander, sondern bei einem bestimmten Planetensatz nur von einer gewählten Ausgangsgröße abhängig. Bei den praktisch realisierten leistungsverzweigten Getrieben werden in der Regel zur stufenlosen Verstellung der Antriebswelle mit der kleineren Leistung hydrostatische Variatoren, die aus Verstellpumpe und Konstantmotor bestehen, eingesetzt.

Da für die in Nutzfahrzeugen hoher Leistung zur Anwendung kommenden Getriebe große Verstellbereiche benötigt werden, müssen auch Hydrostaten größerer Leistung eingesetzt werden, was zu einem geringeren Wirkungsgrad des Getriebes führt. Weil eine Verringerung des Wirkungsgrades unerwünscht ist, werden an die Abtriebswelle weitere Zahnräderstufen angekoppelt, so daß zwar ein größerer Gesamtbereich der Verstellung erzielt wird, jedoch der Nachteil in Kauf genommen werden muß, daß der Übergang zu den weiteren Stufen nicht lastschaltbar ist.

Aus der DE-A-29 50 619 ist ein leistungsverzweigtes Getriebe mit Planetendifferentialgetriebe bekannt, dessen eines Sonnenrad drehbar mit der Ausgangswelle und dessen anderes Sonnenrad drehsteif mit der Eingangswelle verbunden ist. Der Steg des Planetendifferentialgetriebes ist über eine Schaltkupplung drehfest an die Eingangswelle bzw. an die Ausgangswelle anschließbar. Die Doppelplanetenräder kämmen mit einem Hohlrad, das über ein Zahnrad mechanisch an die Welle einer regelbaren Verdrängermaschine (Pumpe/Motor) angeschlossen ist. Die Verdrängermaschine ist hydraulisch über ein hydraulisches Steuergerät mit zwei unabhängig voneinander steuerbaren Abtriebsverdrängermaschinen gekoppelt. Ein derartiges Getriebe ist aufgrund der Doppelplanetenräder relativ aufwendig und weist nicht die Schaltstufen auf, die im Falle der Erfindung vorgesehen sind. Des weiteren weist dieses Getriebe weder eine Kupplungswelle im Sinne des gattungsgemäßen Lastschaltgetriebes noch die dieser Kupplungswelle zugeordneten Kupplungen auf.

Die DE-A-24 52 335 betrifft ein mehrgängiges Getriebe, bei dem Zwischenübersetzungen dadurch geschaffen werden, daß die durch das Differential verzweigte Leistung auf zwei starre Übersetzungen geleitet wird. Bei Gangwechsel werden hierbei jeweils nur zwei Kupplungen betätigt; durch Verwendung mehrerer starrer Übersetzungen läßt sich hierbei kostengünstig ein Getriebe mit beliebig vielen Gängen schaffen. Die Kupplungen sind vorzugsweise Lamellenkupplungen, dem Differential ist zur Erhöhung des Fahrkomforts ein hydrodynamischer Drehmomentwandler vorgeschaltet. Ein derartiges Getriebe ist nicht lastschaltbar und es weist keinen hydrostatischen Getriebeteil auf.

Aus der DE-A-38 15 780 ist ein hydrostatisch-mechanisches Lastschaltgetriebe mit einem mehrere Wellen aufweisenden Planetengetriebe, mit einem stufenlos einstellbaren hydrostatischen Getriebe mit volumenverstellbarer und volumenkonstanter Verdrängermaschine bekannt. Das Planetengetriebe ist ein Doppel-Planetengetriebe in Form zweier Planetenstufen, deren jede aus Sonnenrad, Hohlrad, Planetenradträger und Planetenrad besteht. Die Wellen des Planetengetriebes bilden die Antriebswelle, die Welle für die volumenkonstante Verdrängermaschine und Koppelwellen, die über Zahnradstufen wechselweise auf die Abtriebswelle wirken. Das Problem, beim Schalten die Zentralwelle schnell zu reversieren, spielt bei diesem Lastschaltgetriebe keine Rolle, weil beim Schalten Synchronlauf der zu verbindenden Wellen bereits vorliegt. Der Gangwechsel erfolgt bei synchronen Drehzahlen, wobei die Kupplungen lastfrei zu schalten sind, und ohne Zugkraftunterbrechung. Ein derartiges Lastschaltgetriebe ist mechanisch kompliziert und aufwendig, weil Planetengetriebe, Hohlwellen usw. doppelt erforderlich sind. Außerdem unterscheidet sich dieses Getriebe von dem gattungsgemäßen Getriebe dadurch, daß es keine Lamellenkupplungen zwischen Eingangs- und Zentralwelle sowie zwischen Antriebs- und Kupplungswelle aufweist.

Ein Getriebe der gattungsgemäßen Art, das jedoch keine Überbrückungskupplung zwischen Eingangs- und Zentralwelle besitzt, ist aus der DE-C-10 21 251 bekannt. Dieses Getriebe verwendet ein bekanntes mehrgängiges Zahnräderwechselgetriebe, dessen die zu schaltenden Zahnräder tragende Getriebewelle über ein Differential einerseits durch die Eingangswelle, andererseits durch den Motor eines hydrostatischen Getriebes antreibbar ist, wobei die Eingangswelle die Pumpe des hydrostatischen Getriebes treibt. Bei diesem Fahrzeugantrieb wird der Motor des hydrostatischen Getriebes oder ein weiterer, zusätzlicher hydrostatischer Motor zur Angleichung der Drehzahl der die zu schaltenden Zahnräder tragenden Getriebewelle an die Drehzahl des mit dieser Welle zu kuppelnden Zahnrades bzw. zur Drehmomententlastung dieser Teile beim Entkuppeln verwendet. Zur Schalterleichterung wird hierbei ein Überlagerungsgetriebe eingesetzt.

Aufgabe der Erfindung ist es, ein gattungsgemäßes Getriebe so auszugestalten, daß ein extrem schnelles Umschalten der Zentralwelle von + max. nach - max. bei der Umschaltung benachbarter Stufenkupplungen erzielt wird und ein Getriebe mit großem, stufenlos regelbarem Bereich geschaffen wird.

Gemäß der Erfindung wird diese Aufgabe mit den Merkmalen des Kennzeichens des Ansprüches 1 gelöst. Weitere Ausgestaltungen der Erfindung sind Gegenstand der Unteransprüche.

Mit der erfindungsgemäßen Anordnung wird erreicht, daß der Antrieb der Zentralwelle dadurch reversierbar ist, daß von der einen auf die andere Kupplung der beiden mit der Konstantmotorwelle gekoppelten Kupplungen umgeschaltet wird. Das Umschalten erfolgt gleichzeitig mit der Umschaltung der benachbarten Kupplungen der Kupplungswelle. Dadurch werden nacheinander alle Stufenbereiche bis zur gewünschten Geschwindigkeit durchgefahren. Die Umschaltung erfolgt gleichzeitig und mit hoher Geschwindigkeit, so daß das Getriebe auch bei hoher Belastung ruckfrei arbeitet.

Bei der Übertragung des Drehmomentes auf die Kupplungswelle durch die Gegenlamellen entstehen bei vier Kupplungen vier Stufen, die so ausgelegt sind, daß der Sprung der benachbarten Kupplungen dem Verstellbereich der Antriebswelle entspricht. Dadurch kann der Gesamtbereich der stufenlosen Verstellung der Kupplungswelle bei vier Kupplungen viermal vergrößert werden. Um dies zu erreichen, wird bei einer Aufwärtsverstellung (hin zu größeren Geschwindigkeiten) am Ende der Verstellung der Hydropumpe gleichzeitig mit der Umschaltung der benachbarten Stufenkupplungen die Zentralwelle schnell von der plus-maximalen in die minus-maximale Drehung reversiert. Dadurch werden nacheinander alle Stufenbereiche bis zur gewünschten Geschwindigkeit durchgefahren. Diese Umschaltung muß rasch erfolgen, damit das Getriebe auch bei hoher Belastung ruckfrei arbeitet.

Umgekehrt wird bei einer Verstellung nach unten, d.h. in Richtung niedrigerer Geschwindigkeiten, bei der Umschaltung der benachbarten Stufenkupplungen die Zentralwelle von einer minus-maximalen in eine plus-maximale Drehung reversiert.

Dies wird dadurch erreicht, daß zwischen Konstantmotorwelle und Zentralwelle eine Doppelkupplung vorgesehen ist, die mit zwei frei drehenden Zahnrädern auf der Konstantmotorwelle zusammenwirkt, welche ihrerseits mit Zahnrädern auf der Zentralwelle kämmen, und daß die Doppelkupplung derart schaltbar ist, daß bei einer Einschaltung der einen Kupplung die Drehrichtung der Zentralwelle entgegengesetzt zu der bei Einschaltung der anderen Kupplung ist.

Die Lamellenkupplung zwischen Eingangswelle und Zentralwelle wird selbsttätig eingeschaltet, wenn die Drehzahlen der Antriebswelle und der Zentralwelle gleich groß sind. Dabei übernimmt der Planetensatz die Funktion einer starren Kupplung zwischen der Eingangswelle und der Antriebswelle. Dabei wird die Doppellamellenkupplung zwischen Konstantmotorwelle und Zentralwelle ausgeschaltet.

Der Wirkungsgrad des Getriebes kann durch das Ausschalten der mit der Konstantmotorwelle gekoppelten Doppelkupplung wesentlich verbessert werden.

Am Ende der Zentralwelle und der Kupplungswelle sind Zahnräder und eine elektrisch betätigte Kupplung vorgesehen. Die Zahnräder haben die gleiche Zähnezahl und den gleichen Modul wie die Zahnräder der ersten Stufe auf der Antriebswelle und Kupplungswelle, jedoch ist das Flankenspiel der Zähne der zwischen Zentralwelle und Kupplungswelle angeordneten Kupplung zugeordneten Zahnräder größer. Mit einer derartigen Anordnung ist bei ausgeschalteten Stufenkupplungen auf der Kupplungswelle ein voll-hydrostatischer Antrieb möglich.

Wegen der kleinen Leistung und der speziellen Eigenschaften ist eine derartige Anordnung von Vorteil für extrem niedrige Geschwindigkeiten, z.B. von 0 - 5 kmh vorwärts und rückwärts.

Da bei den plus-maximalen Drehzahlen der Zentralwelle des hydrostatischen Antriebs gleiche Drehzahlen der Eingangswelle und der Antriebswelle gegeben sind, kann bei dieser Verstellung die ruckfreie Übernahme des normalen Antriebes durch Einschalten der Kupplung der niedrigsten Schaltstufe auf der Kupplungswelle erfolgen. Hierdurch kann die am Ende der Antriebswelle angeordnete Kupplung eine einfache elektrohydraulisch betätigte Klauenkupplung sein. Dies gilt sowohl bei Beschleunigung als auch bei Verzögerung der Fahrt des Fahrzeuges.

Die Freilaufwelle und die Hilfspumpenwelle sind über zwei Freiläufe angetrieben, und zwar das Zahnrad mit dem einen Freilauf von einem Zahnrad mit motorabhängigen Drehzahlen über Zwischenrad und Freilauf und das Zahnrad mit dem anderen Freilauf von einem Zahnrad mit wegabhängigen Drehzahlen von der Kupplungswelle über Zahnräder. Mit diesen Hilfsantrieben wird eine stetige Funktion der Hydrostatik, der Betätigung und der Schmierung des Getriebes erreicht. Ferner arbeitet dieser Hilfsantrieb auch bei Motorausfall, wenn das Fahrzeug sich nach vorwärts oder rückwärts bewegt. Damit ist auch ein sicheres Anfahren bzw. Starten des Motors (bei niedrigen Temperaturen oder schwacher Batterie) und das Lenken des Fahrzeuges beim Abschleppen gewährleistet.

Der Abtrieb der Kupplungswelle ist mit einer weiteren Kupplungswelle über Zahnräderpaare gekoppelt, die frei auf dieser zweiten Kupplungswelle gelagert und mit einer auf dieser Kupplungswelle sitzenden Kupplung verbunden sind, die absichtlich keine neutrale Stellung hat, sondern die in der einen Stellung auf die Arbeitsgruppe und in der anderen Stellung auf die Straßengruppe geschaltet wird. Von dieser Kupplungswelle führt der Antrieb weiter über auf der Kupplungswelle sitzende Zahnräder und eine Kupplung zur Ausgangswelle für die Vorwärtsfahrt und über weitere Zahnräder und eine weitere Kupplung für die Rückwärtsfahrt. Diese Kupplungen können einfache Klauenkupplungen sein, haben aber für die stetige Verbindung mit der ersten Kupplungswelle keine Null-Stellung, so daß ein stetiger Antrieb der Hilfspumpen bei Fahrt gewährleistet ist.

Der Allradantrieb des Fahrzeuges führt über ein Längsdifferential und eine Ausgleichswelle an Ausgangskupplungen. Eine Differentialsperre sorgt für den einwandfreien Antrieb der Räder auf dem Acker und unter schlechten Betriebsbedingungen.

Zur Betätigung des Getriebes wird z.B. ein Betätigungshebel in einer Kulisse geführt, wobei der Betätigungshebel seine eingenommene Stellung beibehält und der Fahrer den Hebel für schnellere Fahrt in entsprechende Positionen bewegt und dasGetriebe in die gewünschte Geschwindigkeit verstellt. Bei Verringerung der Fahrgeschwindigkeit kann der Fahrer den Hebel in der Kulisse zurückstellen. Die Fahrt mit bestem Wirkungsgrad ergibt sich in den Null-Stellungen, weil der Hydromotor stillsteht, und in den Positionen plus-maximaler Verstellung, weil der Arbeitsdruck der Hydrostatik bei eingeschalteter Kupplung zwischen Eingangs-und Zentrawelle auf den Speisedruck sinkt. Bei einer elektrischen Betätigung des Getriebes befindet sich am Hebel ein Schalter zum Umschalten auf vollhydrostatischen Antrieb, der durch Bewegung des Hebels zwischen den Positionen "Null" (Stillstand) und + max. (vorwärts) und - max. (rückwärts) erfolgt. Durch Umschalten des Schalters kann der Fahrer lastschaltbar in der plus-maximalen Position mit dem normalen hydromechanischen Betrieb weiterfahren.

Mit dem erfindungsgemäßen Getriebe, das z.B. für Maschinen mit einer Eingangsleistung von ca. 300 PS bestimmt ist, wird eine Geschwindigkeitsleistung von 0 bis mindestens 40 kmh erreicht, das Getriebe ist in zweimal vier Schaltstufen vorwärts und rückwärts lastschaltbar ausgelegt, die einzelnen Gänge sind von Schaltpunkt zu Schaltpunkt stufenlos regelbar. Ein Zapfwellenausgang jeweils nach vorne und hinten ist im Getriebe jeweils getrennt lastschaltbar mit einer Ausgangsdrehzahl von ca. 1000 U/min integriert, es ist ein Allradantrieb über ein sperrbares Längsdifferential vorgesehen, der Gruppensprung Acker-Straße wie auch der Sprung im Rückwärtsfahrbereich ist synchron ausgeführt, die Ansteuerung des Getriebes erfolgt elektrisch-hydraulisch, wahlweise ist ein hydrostatischer Betrieb im Geschwindigkeitsbereich von 0 bis etwa 5 kmh gewährleistet, das Schalten des Getriebes erfolgt ruckfrei, die Bedienbarkeit des Getriebes durch den Fahrzeugführer ist extrem einfach mit einem einzigen Schalthebel möglich, und für Lenk- und Schmierpumpe sowie Spülpumpe für die Verstellpumpe, die bei Ausfall des Antriebsmotors weiterläuft, solange sich das Fahrzeug bewegt, ist jeweils ein Antrieb vorgesehen.

Nachstehend wird die Erfindung in Verbindung mit der Zeichnung anhand eines Ausführungsbeispieles erläutert. Es zeigt:
- Fig. 1: ein Gesamtschaltbild des Lastschaltgetriebes nach der Erfindung mit Hydrostatikkreis, und
- Fig. 2: eine Ausführungsform der Betätigung des Lastschaltgetriebes.

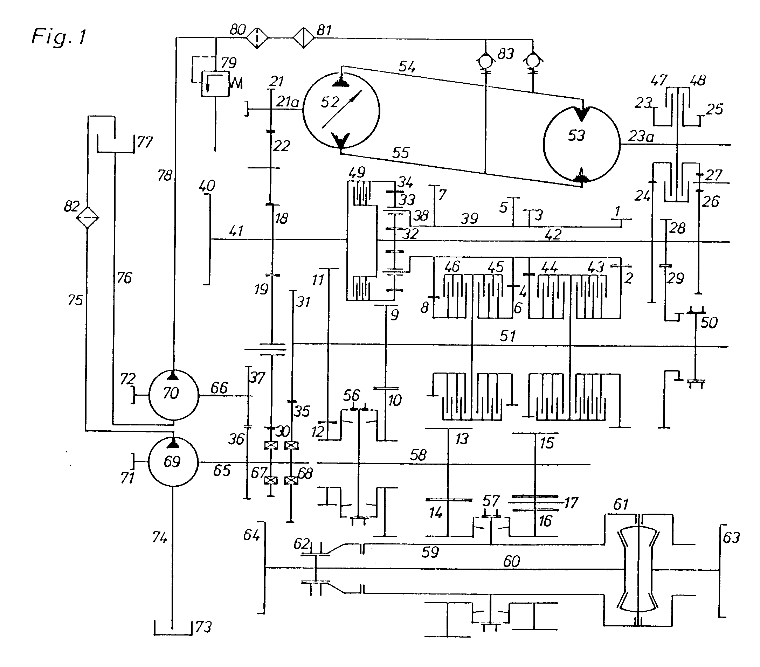

Bei dem Schaltbild eines Lastschaltgetriebes nach Fig. 1 sind Zahnräder 1 - 8 dargestellt, von denen die Zahnräder 1 und 2 die Stufe 1, die Zahnräder 3 und 4 die Stufe 2, die Zahnräder 5 und 6 die Stufe 3, und die Zahnräder 7, 8 die Stufe 4 des Getriebes darstellen. Die Zahnräder 9 und 10 entsprechen dem Arbeitsbereich, die Zahnräder 11 und 12 dem Straßenbereich, die Zahnräder 13 und 14 der Vorwärtsfahrt, die Zahnräder 15, 16 und 17 der Rückwärtsfahrt. Die Zahnräder 18 und 19 sind dem Zapfwellen- und Verstellpumpenantrieb zugeordnet, mit 20 ist ein Zapfwellenantrieb bezeichnet, der nicht dargestellt ist, mit 21 ein Verstellpumpenantrieb. 21a bezeichnet die Pumpenwelle, Zahnrad 22 ein Zwischenrad, Zahnräder 23, 24, 25, 26, 27 einen Zentralrad-Antrieb. Die Zahnräder 28 und 29 sind dem Vollhydrostatik-Antrieb zugeordnet, das Zahnrad 30 einem Hilfspumpenantrieb mit Freilaufrad. Die Zahnräder 31 und 35 stellen einen fahrtabhängigen Hilfspumpenantrieb mit Freilaufrad dar. Die Zahnräder 36 und 37 sind dem Hilfspumpenantrieb zugeordnet.

Das Zahnrad 32 stellt das Zentralrad des Planetensatzes dar, das Zahnrad 33 das Planetenrad des Planetensatzes, und das Zahnrad 34 das Hohlrad des Planetensatzes. Der Steg des Planetensatzes ist mit 38 bezeichnet, mit 39 die Antriebswelle (Hohlwelle), 40 deutet die Eingangskupplung oder Wellenverzahnung an.

Der mechanische Antrieb weist eine Eingangswelle 41 auf, der hydrostatische Antrieb eine Zentralwelle 42. Die Antriebswelle (Hohlwelle) 39 ist mit dem Steg 38 fest verbunden.

Die Kupplungen 43 - 46 sind auf der Kupplungswelle 51 angeordnet. Mit 49 ist eine fünfte Lamellenkupplung dargestellt, die als Überbrückungskupplung eingeschaltet wird, wenn die Wellen 41 und 42 gleiche Drehzahl haben. Des weiteren ist mit 50 eine Kupplung dargestellt, die in den vollhydrostatischen Antriebszweig eingeschaltet ist. Die vom einfachen Planetensatz 32, 33, 34, 38 stufenlos verstellbare Antriebswelle 39 nimmt die Zahnräder 1, 3, 5, 7 auf, die in Eingriff mit den frei drehenden Zahnrädern 2, 4, 6, 8 der Kupplungswelle 51 stehen. Die Zahnräder 2, 4, 6, 8 tragen die Lamellen für die entsprechenden Stufen-Kupplungen 43, 44, 45, 46, während die Gegenlamellen beim Einschalten der Kupplung das Drehmoment auf die Kupplungswelle 51 übertragen, so daß bei vier Kupplungen vier Stufen entstehen und der Sprung der benachbarten Kupplungen dem Verstellbereich der Antriebswelle 39 entspricht.

Die Lamellenkupplung 49 ist zwischen Eingangswelle 41 und Zentralwelle 42 angeordnet und wird selbsttätig eingeschaltet, wenn die Drehzahlen von Eingangswelle 41 und Zentralwelle 42 gleich groß sind; der Planetensatz stellt dabei eine starre Kupplung zwischen Eingangswelle 41 und Antriebswelle 39 dar.

Die Konstantmotorwelle 23a nimmt zwei Kupplungen 47, 48 auf, die zweckmäßigerweise als Doppellamellenkupplung ausgebildet sind. Die Kupplung 47 treibt die Zahnräder 23 und 24, die Kupplung 48 die Zahnräder 25, 26, 27 mit gleicher Übersetzung an. Der Antrieb der Zentralwelle 42 ist auf diese Weise durch Umschalten von einer dieser Kupplungen 47, 48 auf die andere reversierbar. Das Umschalten von der Kupplung 47 auf 48 bzw. umgekehrt erfolgt gleichzeitig mit der Umschaltung der benachbarten Kupplungen 43 - 46. Dadurch werden nacheinander alle Stufenbereiche bis zur gewünschten Geschwindigkeit durchgefahren. Wahlweise kann diese Doppelkupplung 47, 48 auch auf der Zentralwelle 42 angeordnet sein. Bei einer derartigen Ausführung sind dann die Zahnräder 23 und 25 fest und die Zahnräder 24 und 26 frei gelagert.

Der geschlossene Hydrostatikkreis besteht aus der mit der Pumpenwelle 21a in Verbindung stehenden Verstellpumpe 52, dem Konstantmotor 53, der über die Konstantmotorwelle 23a mit der Zentralwelle 42 für den hydrostatischen Antrieb und mit der Kupplung 50 verbunden ist, sowie den beiden Verbindungsleitungen 54 und 55.

Eine erste Synchronkupplung 56 schaltet auf Arbeitsbereich oder Straßenbereich der Maschine und ist auf einer Synchronkupplungswelle 58 angeordnet, die mit einer zweiten Synchronkupplung (Klauenkupplung) 57 in Verbindung steht, welche ihrerseits mit einer Ausgangswelle 59 verbunden ist, die mit einer Ausgleichswelle 60 mit einem Längsdifferential 61 und einer Ausgangskupplung 64 oder Wellenverzahnung für die Vorderachse sowie einer Ausgangskupplung 63 oder Wellenverzahnung für die Hinterachse verbunden ist. Mit 62 ist eine Differentialsperre bezeichnet.

Eine Freilaufwelle 65 und eine Hilfspumpenwelle 66 werden über Freiläufe 67, 68 angetrieben, wobei das Zahnrad 30 mit dem Freilauf 67 von dem Zwischenrad 19 und das Zahnrad 35 mit dem Freilauf 68 vom Zahnrad 31 angetrieben wird. Der Freilauf 67 ist ein motorabhängiger Hilfspumpenantrieb, der Freilauf 68 ein fahrtabhängiger Hilfspumpenantrieb. 69 stellt eine erste Hilfspumpe dar, die Hydraulikmedium, z.B. Öl aus der Ölwanne des Getriebes pumpt, 70 die zweite Hilfspumpe, die z.B. eine Doppelpumpe ist und einen Kreis für die Betätigung und Schmierung des Getriebes sowie einen Kreis für die Hydrostatikbetätigung und Speisung besitzt. 71 und 72 sind Kupplungen für den weiteren Antrieb von Hilfsaggregaten, 73 bezeichnet die Ölwanne des Getriebes, 74 die Saugleitung, 75 die Ölleitung zum Ölbehälter des Hydrauliksystems, 76 eine Saugleitung für die Hilfspumpe 70, 77 den Ölbehälter des Hydrauliksystems, 78 eine Druckleitung für die Hydrostatik, 79 ein elektrisch betätigtes Druckbegrenzungsventil, 80, 82 bezeichnen einen Hydraulikfilter und 81 einen Kühler. Mit 83 sind Rückschlagventile mit Hochdruckbegrenzungsventilen dargestellt, die an die Leitungen 54 und 55 angeschlossen sind.

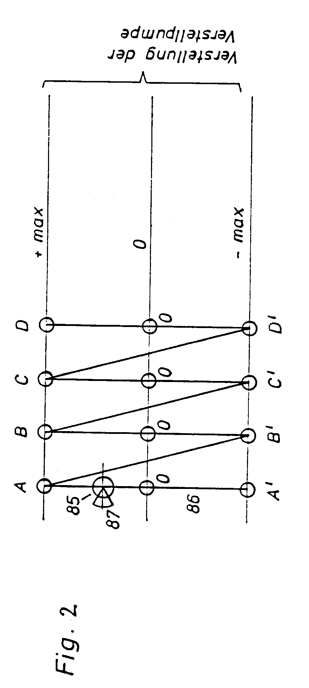

Fig. 2 zeigt eine Ausführungsform für die Betätigung des Getriebes, bei der ein Betätigungshebel in einer Kulisse geführt ist. Ein Schalter im Betätigungshebel zum Umschalten auf vollhydrostatischen Antrieb ist nicht dargestellt. Die Buchstaben A, B, C und D bezeichnen die plus-maximale Verstellung der Verstellpumpe, die Buchstaben A′, B′, C′ und D′ die minus-maximale Verstellung der Verstellpumpe. Mit 0 ist jeweils die Null-Verstellung der Verstellpumpe angedeutet. Die ausgezogenen Linien entsprechen der Bewegung des Betätigungshebels in der Kulisse.

## Patentansprüche

1. Leistungsverzweigtes hydrostatisch-mechanisches Lastschaltgetriebe mit einer Eingangswelle (41) für den mechanischen Antrieb, einer Zentralwelle (42) für den hydrostatischen Antrieb, einer von einem Planetensatz stufenlos verstellbaren Antriebswelle (39), die über ein mehrgängiges Schaltgetriebe bildende Zahnräder mit einer parallel zur Antriebswelle angeordneten Kupplungswelle (51) über Kupplungen (43-46) und einer Ausgangswelle (58) verbunden ist, einem hydrostatischen Antrieb bestehend aus hydrostatischer Verstellpumpe, hydrostatischem Konstantmotor (53) und beide miteinander verbindenden Verbindungsleitungen (54, 55) und Lamellenkupplungen (49; 43-46) zwischen Eingangs- und Zentralwelle sowie zwischen Antriebs- und Kupplungswelle,
**dadurch gekennzeichnet,** daß zwischen hydrostatischer Konstantmotorwelle (23a) und Zentralwelle (42) eine erste Kupplung (47) mit frei drehendem erstem Zahnrad (23) und eine zweite Kupplung (48) mit frei drehendem zweitem Zahnrad (25) eingeschaltet sind, daß die beiden Zahnräder (23, 25) mit Zahnrädern (24, 27, 26) auf der Zentralwelle (42) kämmen, und daß die beiden Kupplungen (47, 48) unabhängig voneinander derart schaltbar sind, daß bei einer Einschaltung der ersten Kupplung (47) die Drehrichtung der Zentralwelle (42) entgegengesetzt zu der bei Einschaltung der zweiten Kupplung (48) ist.

2. Lastschaltgetriebe nach Anspruch 1, dadurch gekennzeichnet, daß die Zentralwelle (42) und die Kupplungswelle (51) durch Zahnräder (28, 29) und eine elektrisch betätigte Kupplung (50) bei ausgeschalteten Kupplungen des Schaltgetriebes (43 - 46) und vollhydraulischem Betrieb miteinander verbindbar sind, wobei die Zahnräder (28, 29) gleiche Zähnezahl wie die Zahnräder (1, 2) des I. Ganges des Schaltgetriebes, jedoch ein größeres Spiel haben.

3. Lastschaltgetriebe nach Anspruch 1, dadurch gekennzeichnet, daß bei eingeschalteter Überbrückungs-Lamellenkupplung (49) die erste Kupplung (47) automatisch auf Null-Stellung geschaltet ist.

4. Lastschaltgetriebe nach einem der Ansprüche 1 - 3, dadurch gekennzeichnet, daß der Speisedruck des hydrostatischen Kreises (52 - 55) durch ein elektrisch betätigtes Steuerorgan (79) einstellbar ist.

5. Lastschaltgetriebe nach einem der Ansprüche 1 - 4, dadurch gekennzeichnet, daß die zwischen Zentralwelle (42) und Eingangswelle (41) angeordnete Überbrückungs-Lamellenkupplung (49) eingeschaltet wird, wenn die Drehzahl der Eingangswelle (41) gleich der Drehzahl der Zentralwelle (42) ist.

6. Lastschaltgetriebe nach einem der Ansprüche 1 - 5, dadurch gekennzeichnet, daß eine Freilaufwelle (65) motorabhängig über Zwischenrad (19) über den Freilauf (67) und wegabhängig von der Kupplungswelle (51) über Zahnräder (31, 35) über den Freilauf (68) angetrieben ist.

7. Lastschaltgetriebe nach Anspruch 6, dadurch gekennzeichnet, daß die Kupplungswelle (51) und die Ausgangswelle (59, 60) über Kupplungen (56, 57) dauernd miteinander gekoppelt sind, und daß diese Kupplungen ohne Null-Stellung ausgelegt sind.

8. Lastschaltgetriebe nach Anspruch 1, dadurch gekennzeichnet, daß die erste und die zweite Kupplung (47, 48) als Doppellamellenkupplung ausgebildet sind.

9. Lastschaltgetriebe nach einem der Ansprüche 1 - 8, dadurch gekennzeichnet, daß der Betätigungshebel (89) zur Verstellung der Verstellpumpe (52) in einer Betätigungskulisse (90) in Stufen von - max. (minimale Drehzahl) über 0 nach + max. (maximale Drehzahl) und zurück nach -max. stufenlos schaltbar ist.

10. Lastschaltgetriebe nach Anspruch 9, dadurch gekennzeichnet, daß der Betätigungshebel (89) einen Schalter (91) zum Umschalten auf Vollhydrostatik aufweist.

## Claims

1. Split-torque hydromechanical transmission with an input shaft (41) for a mechanical drive, a central shaft (42) for the hydrostatic drive, a drive shaft (39) continuously variable through a planet set and which is connected by means of a multiple-gear transmission-forming gear wheels to a clutch shaft (51) positioned parallel to the drive shaft by means of clutches (43-46) and an output shaft (58), a hydrostatic drive comprising a hydrostatic variable-delivery pump, hydrostatic constant motor (53) and connecting these connecting lines (54, 55) and friction disk clutches (49; 43-46) between the input and central shafts, as well as between the drive and clutch shafts, characterized in that between the hydrostatic constant motor shaft (23a) and a central shaft (42) are engaged a first clutch (47) with a freely rotating, first gear wheel (23) and a second clutch (48) with a freely rotating, second gear wheel (25), that the two gear wheels (25) mesh with gear wheels (24, 27, 26) on the central shaft and that the two clutches (47, 48) are operable independently of one another in such a way that on engaging the first clutch (47) the rotation direction of the central shaft (42) is the opposite to that on engaging the second clutch (48).

2. Transmission according to claim 1, characterized in that the central shaft (42) and the clutch shaft (51) are interconnectable by gear wheels (28, 29) and an electrically operated clutch (50) with disengaged clutches of the transmission (43-46) and full hydraulic operation, the gear wheels (28, 29) having the same number of teeth as the gear wheels (1, 2) of the first gear of the transmission, but have a larger clearance.

3. Transmission according to claim 1, characterized in that with the bridging friction disk clutch (49) engaged, the first clutch (47) is automatically switched to the neutral position.

4. Transmission according to any one of the claims 1 to 3, characterized in that the feed pressure of the hydrostatic circuit (52-55) is adjustable by an electrically operated control member (79).

5. Transmission according to one of the claims 1 to 4, characterized in that the bridging friction disk clutch (49) positioned between the central shaft (42) and the input shaft (41) is engaged if the speed of the input shaft (41) is the same as the speed of the central shaft (42).

6. Transmission according to one of the claims 1 to 5, characterized in that a freewheel shaft (65) is driven in motor-dependent manner by means of the intermediate wheel (19) by means of the freewheel (67) and in path-dependent manner by the clutch shaft (51) via gear wheels (31, 35) and the freewheel (68).

7. Transmission according to claim 6, characterized in that the clutch shaft (51) and the output shaft (59, 60) are permanently coupled together by means of clutches (56, 57) and that these clutches are designed without a neutral position.

8. Transmission according to claim 1, characterized in that the first and second clutches (47, 48) are constructed as double friction disk clutches.

9. Transmission according to one of the claims 1 to 8, characterized in that the operating lever (89) for adjusting the variable-delivery pump (52) is continuously shiftable in an operating link (29) in steps from -max (minimum speed) via 0 to +max (maximum speed) and back to -max.

10. Transmission according to claim 9, characterized in that the operating lever (89) has a switch (91) for switching to full hydrostatics.

## Revendications

1. Transmission hydromécanique à division de puissance avec un arbre d'entrée (41) pour la commande mécanique, un arbre central (42) pour la commande hydrostatique, un arbre de commande (39) réglable de manière continue par un train planétaire ou épicycloïdal, arbre (39) qui est relie par des roues dentées formant une transmission à changement de vitesse à plusieurs vitesses au moyen d'embrayages (43-46) et d'un arbre de sortie (58) à un arbre d'embrayage (51) disposé parallèlement à l'arbre de commande, une commande hydrostatique constituée d'une pompe hydrostatique à cylindrée variable, d'un moteur hydrostatique à cylindrée constante (53) et de conduites de raccordement (54, 55) reliant les deux, et des embrayages à disques (49; 43-46) entre l'arbre d'entrée et l'arbre central ainsi qu'entre l'arbre de commande et l'arbre d'embrayage,
caractérisée en ce qu'entre l'arbre du moteur hydrostatique à cylindrée constante (23a) et l'arbre central (42) on a inséré un premier embrayage (47) avec une première roue dentée (23) tournant librement et un deuxième embrayage (48) avec une deuxième roue dentée (25) tournant librement, les deux roues dentées (23, 25) sont engrenées sur des roues dentées (24, 27, 26) sur l'arbre central (42), et les deux embrayages (47, 48) peuvent être manoeuvrés indépendamment l'un de l'autre de manière telle que, lorsque le premier embrayage (47) est embrayé, le sens de rotation de l'arbre central (42) est opposé à celui où le deuxième embrayage est embrayé.

2. Transmission hydromécanique selon la revendication 1 caractérisée en ce que l'arbre central (42) et l'arbre d'embrayage (51) peuvent être reliés emsemble par des roues dentées (28, 29) et un embrayage (50) actionné électriquement lorsque les embrayages de la transmission à changement de vitesse (43 - 46) sont débrayés et lorsque le fonctionnement est entièrement hydraulique, les roues dentées (28, 29) ayant le même nombre de dents que les roues dentées (1, 2) de la première vitesse de la transmission à changement de vitesse, mais ayant un jeu plus grand.

3. Transmission hydromécanique selon la revendication 1 caractérisée en ce que lorsque l'embrayage à disques de pontage (49) est embrayé, le premier embrayage (47) est placé automatiquement en position neutre.

4. Transmission hydromécanique selon l'une des revendications 1 à 3 caractérisée en ce que la pression d'alimentation du circuit hydrostatique (52 - 55) est réglable au moyen d'un organe de commande (79) actionné électriquement.

5. Transmission hydromécanique selon l'une des revendications 1 à 4 caractérisée en ce que l'embrayage à disques de pontage (49) disposé entre l'arbre central (42) et l'arbre d'entrée (41) est mis en prise lorsque la vitesse de rotation en tours/minute de l'arbre d'entrée (41) est identique à la vitesse de rotation de l'arbre central (42).

6. Transmission hydromécanique selon l'une des revendications 1 à 5 caractérisée en ce qu'un arbre (65) à roue libre est entraîné en dépendance du moteur par l'intermédiaire de la roue intermédiaire (19) et de la roue libre (67) et en dépendance de la voie par l'arbre d'embrayage (51) au moyen de roues dentées (31, 35) et de la roue libre (68).

7. Transmission hydromécanique selon la revendication 6 caractérisée en ce que l'arbre d'embrayage (51) et l'arbre de sortie (59, 60) sont couplés ensemble de manière permanente au moyen de dispositifs d'accouplement (56, 57) et ces dispositifs sont conçus sans position neutre.

8. Transmission hydromécanique selon la revendication 1 caractérisée en ce que le premier et le deuxième embrayage (47, 48) sont agencés sous forme d'embrayage à disques double.

9. Transmission hydromécanique selon l'une des revendications 1 à 8 caractérisée en ce que le levier d'actionnement (89) peut être déplacé par degrés de - max. (vitesse de rotation minimale) en passant par 0 à + max. (vitesse de rotation maximale) et être ramené à - max. sans gradation pour le réglage de la pompe à cylindrée variable (52) dans une coulisse d'actionnement (90).

10. Transmission hydromécanique selon la revendication 9 caractérisée en ce que le levier d'actionnement (89) comporte un commutateur (91) pour le passage à la pleine hydrostatique.
